# EUROPÄISCHE PATENTANMELDUNG

(11) **EP 4 070 899 A2**
(43) Veröffentlichungstag der Anmeldung: **12.10.2022**
(21) Anmeldenummer: 22161517.2
(22) Anmeldetag: 11.03.2022
(51) Int. Cl.: B23C 3/32, B23B 51/02, B23C 5/08, B23C 5/14, B28D 1/14

(54) **VERFAHREN ZUR HERSTELLUNG EINER FÖRDERWENDEL UND BOHRWERKZEUG MIT EINER FÖRDERWENDEL**

(30) Priorität: 16.03.2021 DE 102021202557
(71) Anmelder: Robert Bosch GmbH, 70442 Stuttgart (DE)
(72) Erfinder: Widmann, Rainer, 88285 Bodnegg (DE)

(57) **Zusammenfassung**

Die Erfindung betrifft Verfahren zur Herstellung einer Förderwendel (18), mit m Spiralgängen mittels einer Fräsvorrichtung (200, Fig. 2), wobei in einem ersten Verfahrensschritt mittels des Fräsers (200) n Spiralgänge, wobei n = 2 oder ein Vielfaches von zwei ist, hergestellt werden und in einem zweiten Schritt n-1 weitere Spiralgänge, insbesondere ein einzelner weiterer Spiralgang, hergestellt wird. Die Erfindung betrifft ebenfalls ein Bohrwerkzeug, insbesondere einen Gesteinsbohrer, mit einer Förderwendel, die zumindest drei Spiralgänge (30) aufweist.

## Beschreibung

### Offenbarung der Erfindung

Die Erfindung betrifft ein Verfahren zur Herstellung einer Förderwendel, mit m Spiralgängen mittels einer Fräsvorrichtung, wobei in einem ersten Verfahrensschritt mittels des Fräsers n Spiralgänge, wobei n = 2 oder ein Vielfaches von zwei ist, hergestellt werden und in einem zweiten Schritt n-1 weitere Spiralgänge, insbesondere ein einzelner weiterer Spiralgang, hergestellt wird. Vorteilhaft können dadurch in zwei Arbeitsgängen mit derselben Fräsvorrichtung drei Spiralgänge hergestellt werden.

Die Förderwendel ist insbesondere als ein Teil eines Einsatzwerkzeugs, vorzugsweise eines Bohrwerkzeugs, vorgesehen.

Das Bohrwerkzeug ist insbesondere als ein Gesteinsbohrer ausgebildet, der für einen Bohrhammer vorgesehen ist. Alternativ ist auch denkbar, dass das Bohrwerkzeug als ein Holzbohrer, Fliesenbohrer, Stufenbohrer, Schweißpunktbohrer, etc. ausgebildet ist. Das Bohrwerkzeug kann einstückig oder einteilig ausgebildet sein. Unter einstückig soll im Zusammenhang dieser Anmeldung ein Bauteil verstanden werden, das aus einem Stück ausgebildet und nicht aus mehreren Bauteilen, die stoffschlüssig und/oder kraft- und/oder formschlüssig miteinander verbunden sind, ausgebildet ist. Ein einstückiges Bauteil besteht demnach aus einem einzigen Material. Unter einteilig soll im Zusammenhang dieser Anmeldung insbesondere ein Bauteil aus mehreren Bauteile, die stoffschlüssig miteinander verbunden sind, verstanden werden.

Das Bohrwerkzeug weist einen Bohrkopf auf. Der Bohrkopf kann einstückig mit dem Bohrwerkzeug, insbesondere mit der Förderwendel des Bohrwerkzeugs, ausgebildet sein. Unter einem Bohrkopf soll insbesondere ein Bereich des Bohrwerkzeugs verstanden werden, der zumindest einen Schneidkörper aufweist. Der Schneidkörper weist zumindest ein Schneidelement auf, das als ein Hauptschneidelement oder als ein Nebenschneidelement ausgebildet sein kann. Die Schneidelemente sind insbesondere aus einem Hartmetall ausgebildet. Vorzugsweise weisen die Schneidelemente eine höhere Härte auf, als die Förderwendel. Vorzugsweise weist das Bohrwerkzeug je Spiralgang ein Schneidelement auf. Jedes Schneidelement weist zumindest eine Schneidkante auf. Die Schneidkante entspricht der Schnittgeraden einer Spanfläche und einer Freifläche des Schneidelements. Vorzugsweise weist jedes Schneidelement eine einzelne Schneidkante auf. Alternativ kann das Schneidelement auch mehrere Schneidkanten aufweisen, die insbesondere ineinander übergehen. Vorzugsweise ist der Bohrkopf stoffschlüssig mit der Förderwendel verbunden. Die Verbindung kann beispielsweise über ein Lötverfahren oder ein Schweißverfahren erfolgen.

An seinem dem Bohrkopf abgewandten Ende weist das Bohrwerkzeug ein Einsteckende auf, das zur Kopplung mit einer Werkzeugmaschine, insbesondere einer Handwerkzeugmaschine wie beispielsweise einem Bohrhammer, ausgebildet ist. Vorzugsweise ist das Bohrwerkzeug im Bereich des Einsteckendes derart ausgebildet, dass das Bohrwerkzeug mit einer Werkzeugaufnahme der Handwerkzeugmaschine koppelbar ist. Beispielhaft kann das Bohrwerkzeug im Bereich des Einsteckendes als spezielle Nuten ausgebildete Formschlusselemente aufweisen, die eine SDS-plus-Schnittstelle oder eine SDS-max-Schnittstelle bilden. Zur Bearbeitung eines Werkstücks wird das Bohrwerkzeug mittels des Bohrhammers in einen rotierenden sowie linear oszillierenden bzw. schlagenden Zustand versetzt. Das Bohrwerkzeug dringt während der Bearbeitung in Vorschubrichtung des Bohrwerkzeugs in das Werkstück ein. Die Vorschubrichtung des Bohrwerkzeugs verläuft koaxial zu einer Längsachse des Bohrwerkzeugs und ausgehend von dem Einsteckende in Richtung des Bohrkopfs. Die Längsachse des Bohrwerkzeugs entspricht insbesondere einer Arbeits- oder Rotationsachse des Bohrwerkzeugs. Die Längsachse des Bohrwerkzeugs entspricht im Wesentlichen der Längsachse der Förderwendel.

Des Weiteren wird vorgeschlagen, dass in dem ersten Verfahrensschritt die Spiralgänge derart ausgebildet werden, dass die Förderwendel vor dem zweiten Verfahrensschritt eine konstante Kerndicke aufweist. Unter einer Kerndicke soll im Zusammenhang dieser Anmeldung ein Durchmesser eines Kerndickenkreises bzw. eines größtmöglichen Innenkreises der Förderwendel verstanden werden, der im Querschnitt betrachtet nicht in den Spiralgängen liegt. Unter konstant soll in diesem Zusammenhang insbesondere verstanden werden, dass die Kerndicke entlang der Längsachse im Wesentlichen unverändert bleibt, vorzugsweise lediglich in den Endbereichen, die jeweils als 10%, bevorzugt weniger als 5%, einer Länge der Förderwendel entlang der Längsachse betragen, abweicht.

Weiterhin wird vorgeschlagen, dass in dem zweiten Verfahrensschritt die Spiralgänge derart ausgebildet werden, dass die Förderwendel nach dem zweiten Verfahrensschritt eine konstante Kerndicke, eine steigende Kerndicke oder eine sinkende Kerndicke aufweist. Vorteilhaft kann dadurch mittels des zweiten Fräsvorgangs die Kerndicke der Förderwendel angepasst werden.

Zudem wird vorgeschlagen, dass zwischen dem ersten Verfahrensschritt und dem zweiten Verfahrensschritt die Förderwendel und die Fräsvorrichtung relativ zueinander um einen Winkel von 120° +/- X, wobei X in einem Bereich zwischen 0° und 15° liegt, gedreht werden. Vorteilhaft sind durch den gewählten Winkelbereich symmetrische oder asymmetrische Spiralgänge realisierbar. Insbesondere liegt X in einem Bereich zwischen 0° und 12°, vorzugsweise in einem Bereich zwischen 0° und 8°, bevorzugt zwischen 0° und 4°. Die untere Grenze 0° ist insbesondere dabei nicht umfasst, die obere Grenze ist umfasst. Der Winkel kann auch 120° betragen.

Des Weiteren wird vorgeschlagen, dass im ersten Verfahrensschritt oder im zweiten Verfahrensschritt die Förderwendel während des Fräsens oder eines anderen materialabtragenden Verfahrens (schleifen, drehfräsen, etc.) in einer unterschiedlichen Geschwindigkeit gedreht wird. Vorteilhaft können dadurch die Spiralgänge angepasst werden.

Weiterhin betrifft die Erfindung ein Bohrwerkzeug, insbesondere einen Gesteinsbohrer, mit einer Förderwendel zum Abtransport von Spänen und/oder Gestein aus einem Bohrloch, wobei die Förderwendel zumindest drei Spiralgänge aufweist, die insbesondere über ein Verfahren wie zuvor beschrieben hergestellt wurden.

Des Weiteren wird vorgeschlagen, dass das Bohrwerkzeug am Übergang zwischen den Spiralgängen Verschleißflächen aufweist, wobei eine erste Bandbreite einer ersten Verschleißfläche sich von einer zweiten Bandbreite einer zweiten Verschleißfläche unterscheidet und eine dritte Bandbreite einer dritten Verschleißfläche der ersten Bandbreite entspricht. Vorteilhaft kann dadurch eine optimale Anpassung des Bohrwerkzeugs realisiert werden. Die Verschleißflächen sind jeweils zwischen unterschiedlichen Spiralgängen angeordnet und erstrecken sich insbesondere spiralförmig um die Längsachse der Förderwendel. Die erste Verschleißfläche ist insbesondere am Übergang zwischen dem ersten und dem zweiten Spiralgang ausgebildet. Die zweite Verschleißfläche ist insbesondere am Übergang zwischen dem zweiten und dem dritten Spiralgang ausgebildet. Die dritte Verschleißfläche ist insbesondere am Übergang zwischen dem zweiten und dem dritten Spiralgang ausgebildet. Unter einer Bandbreite soll im Zusammenhang dieser Anmeldung eine Breite der Verschleißfläche senkrecht zu ihrer Erstreckung verstanden werden. Alternativ wäre auch denkbar, dass die Bandbreiten im Wesentlichen gleich ausgebildet sind. Der Unterschied in der Bandbreite beträgt insbesondere zumindest 5%, vorzugsweise zumindest 25%, bevorzugt zumindest 50%. Der Vergleich der Bandbreiten erfolgt dabei jeweils entlang einer Ebene senkrecht zu der Längsachse der Förderwendel.

Weiterhin wird vorgeschlagen, dass die Bandbreiten variierend oder konstant ausgebildet sind. Vorteilhaft kann dadurch die Verschleißflächen optimal angepasst werden. Unter einer konstanten Bandbreite soll im Zusammenhang dieser Anmeldung verstanden werden, dass sich die Bandbreite entlang der Längsachse im Wesentlichen nicht verändert. Unter einer variierenden Bandbreite soll im Zusammenhang dieser Anmeldung insbesondere verstanden werden, dass sich die Bandbreite der Verschließfläche entlang der Längsachse verändert, insbesondere vergrößert und/oder verkleinert. Die Änderung kann dabei zumindest 5%, vorzugsweise zumindest 25%, bevorzugt zumindest 50%, betragen.

Zudem wird vorgeschlagen, dass ein Mittelpunkt eines Kerndickenkreis beabstandet zu einer Rotationsachse des Bohrwerkzeugs ausgebildet ist. Vorzugsweise entspricht der Abstand des Mittelpunkts des Kerndickenkreises von der Längsachse der Förderwendel zumindest 2% der Kerndicke, vorzugsweise zumindest 5% der Kerndicke, bevorzugt 10% der Kerndicke. Der Kerndickenkreis ist der größtmögliche Kreis der im Querschnitt betrachtet von allen Nutengrunden der Spiralgänge tangiert wird. Insbesondere sind die Spiralgänge derart ausgebildet, dass der Mittelpunkt des Kerndickenkreises an keinem Punkt auf der Längsachse der Förderwendel liegt. Vorzugsweise sind die Spiralgänge derart ausgebildet, dass sich der Mittelpunkt des Kerndickenkreises spiralförmig entlang der Längsachse der Förderwendel um diese erstreckt. Der Abstand des Mittelpunks des Kerndickenkreises kann dabei konstant oder ausgehend von dem Bohrkopf sinkend oder steigend ausgebildet sein.

Des Weiteren wird vorgeschlagen, dass die Spiralgänge jeweils eine Steigung aufweisen, wobei die Steigungen konstant oder variierend ausgebildet sind.

Weiterhin wird vorgeschlagen, dass die Spiralgänge unterschiedliche Steigungen aufweisen. Alternativ ist auch denkbar, dass die Spiralgänge die gleiche Steigung aufweisen.

Zudem wird vorgeschlagen, dass die Spiralgänge unterschiedliche Querschnitte aufweisen. Alternativ ist auch denkbar, dass die Spiralgänge die gleichen Querschnitte aufweisen. Die Querschnitte können entlang der Längsachse variierend oder im Wesentlichen konstant ausgebildet sein.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Unterschiedliche Ausführungsformen werden mit einem zusätzlichen Buchstaben gekennzeichnet.

Es zeigen:
Fig. 1a eine Seitenansicht einer ersten Ausführungsform eines Bohrwerkzeugs mit einer Förderwendel;
Fig. 1b ein Querschnitt durch die Förderwendel gemäß Fig. 1a im vorderen Bereich;
Fig. 1c ein Querschnitt durch die Förderwendel gemäß Fig. 1a im hinteren Bereich;
Fig. 1d eine Draufsicht auf das Bohrwerkzeugs gemäß Fig. 1a;
Fig. 2 eine schematische Ansicht einer Fräsgeometrie einer Fräsvorrichtung;
Fig. 3a eine Seitenansicht einer zweiten Ausführungsform eines Bohrwerkzeugs mit einer Förderwendel;
Fig. 3b ein Querschnitt durch die Förderwendel gemäß Fig. 3a im vorderen Bereich;
Fig. 3c ein Querschnitt durch die Förderwendel gemäß Fig. 3a im mittleren Bereich;
Fig. 3d ein Querschnitt durch die Förderwendel gemäß Fig. 3a im hinteren Bereich;
Fig. 4a eine Seitenansicht einer dritten Ausführungsform eines Bohrwerkzeugs mit einer Förderwendel;
Fig. 4b ein Querschnitt durch die Förderwendel gemäß Fig. 4a im vorderen Bereich;
Fig. 4c ein Querschnitt durch die Förderwendel gemäß Fig. 4a im mittleren Bereich;
Fig. 4d ein Querschnitt durch die Förderwendel gemäß Fig. 4a im hinteren Bereich;
Fig. 5a eine Seitenansicht einer vierten Ausführungsform eines Bohrwerkzeugs mit einer Förderwendel;
Fig. 5b ein Querschnitt durch die Förderwendel gemäß Fig. 5a im vorderen Bereich;
Fig. 5c ein Querschnitt durch die Förderwendel gemäß Fig. 5a im mittleren Bereich;
Fig. 5d ein Querschnitt durch die Förderwendel gemäß Fig. 5a im hinteren Bereich;
Fig. 6a eine Seitenansicht einer fünften Ausführungsform eines Bohrwerkzeugs mit einer Förderwendel;
Fig. 6b ein Querschnitt durch die Förderwendel gemäß Fig. 6a im vorderen Bereich;
Fig. 6c ein Querschnitt durch die Förderwendel gemäß Fig. 6a im mittleren Bereich;
Fig. 6d ein Querschnitt durch die Förderwendel gemäß Fig. 6a im hinteren Bereich;
Fig. 7a eine Seitenansicht einer sechsten Ausführungsform eines Bohrwerkzeugs mit einer Förderwendel;
Fig. 7b ein Querschnitt durch die Förderwendel gemäß Fig. 7a im vorderen Bereich;
Fig. 7c ein Querschnitt durch die Förderwendel gemäß Fig. 7a im mittleren Bereich;
Fig. 7d ein Querschnitt durch die Förderwendel gemäß Fig. 7a im hinteren Bereich;
Fig. 8a eine Seitenansicht einer siebten Ausführungsform eines Bohrwerkzeugs mit einer Förderwendel;
Fig. 8b ein Querschnitt durch die Förderwendel gemäß Fig. 8a im vorderen Bereich;
Fig. 8c ein Querschnitt durch die Förderwendel gemäß Fig. 8a im hinteren Bereich;
Fig. 9a eine Seitenansicht einer achten Ausführungsform eines Bohrwerkzeugs mit einer Förderwendel;
Fig. 9b ein Längsschnitt durch die Förderwendel gemäß Fig. 9a.

### Beschreibung der Ausführungsbeispiele

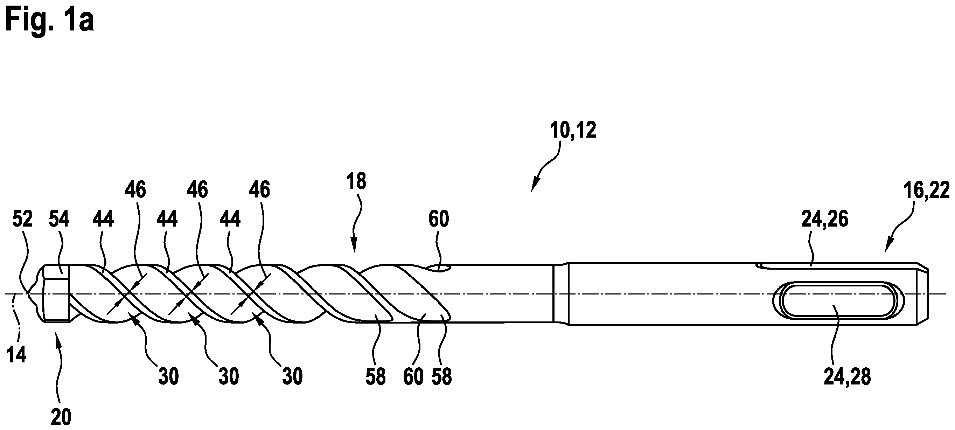

In Fig. 1a ist ein Bohrwerkzeug 10, das als ein Gesteinsbohrer 12 ausgebildet ist, in einer Seitenansicht gezeigt.

Das Bohrwerkzeug 10 weist entlang seiner Längsachse 14 ein Einsteckende 16, eine Förderwendel 18 und einen Bohrkopf 20 auf.

Das Bohrwerkzeug 10 ist beispielhaft für eine Handwerkzeugmaschine (nicht dargestellt) vorgesehen. Die Handwerkzeugmaschine kann beispielsweise als ein Bohrhammer ausgebildet sein.

Das Einsteckende 16 ist zur insbesondere werkzeuglos lösbaren Verbindung des Bohrwerkzeugs 10 mit einem SDS-Plus Bohrhammer ausgebildet. Hierzu weist das Einsteckende 16 eine SDS-Plus Schnittstelle 22 mit den zugehörigen Formschlusselementen 24 in Form von offenen Längsnuten 26 und geschlossenen Längsnuten 28, die sich jeweils parallel zu der Längsachse 14 des Bohrwerkzeugs erstrecken, auf. Das Einsteckende 16 ist insbesondere von der Handwerkzeugmaschine aufnehmbar ausgebildet, sodass das Einsteckende 16 im mit der Handwerkzeugmaschine verbundenen Zustand von der Handwerkzeugmaschine umschlossen ist. Ein Durchmesser des Einsteckendes 16 ist zur Kompatibilität mit einer Vielzahl von Handwerkzeugmaschinen vorzugsweise normiert. Die SDS-Plus Schnittstelle weist beispielhaft einen Durchmesser von etwa 10 mm auf. Andere Arten von Einsteckenden sind ebenfalls denkbar.

Die Förderwendel 18 ist zum Abtransport von Gestein oder Bohrklein aus einem Bohrloch vorgesehen. Die Förderwendel 18 und das Einsteckende 16 können einstückig oder einteilig ausgebildet sein. Die Förderwendel 18 und oder das Einsteckende 16 sind vorzugsweise aus einem Stahl, insbesondere aus einem HSS-Stahl oder einem Vergütungsstahl, ausgebildet. Die Förderwendel 18 weist einen Durchmesser auf, der beispielhaft kleiner ist als der Durchmesser des Einsteckendes 16. Der Durchmesser der Förderwendel 18 entspricht maximal einem Durchmesser des Bohrkopfs 20, der den Durchmesser des entstehenden Bohrlochs im Wesentlichen vorgibt. Beispielhaft ist der Durchmesser der Förderwendel 18 etwas kleiner als der Durchmesser des Bohrkopfs 20.

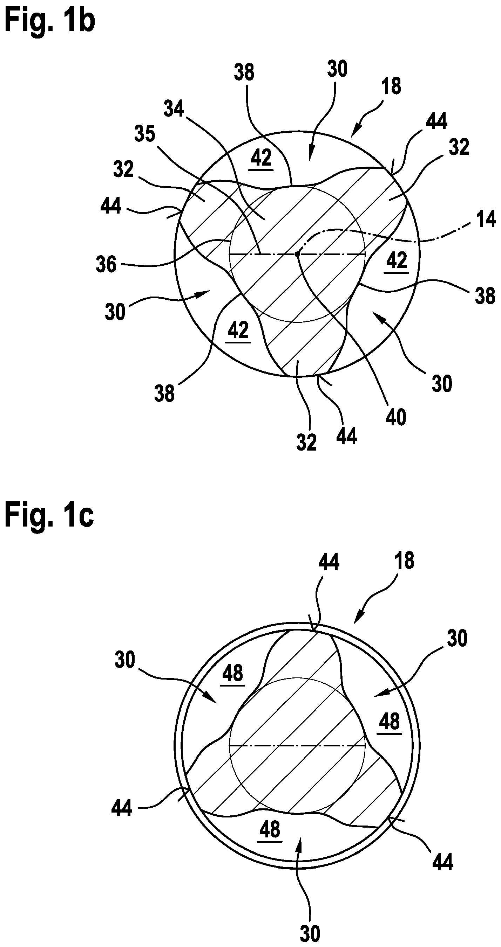

Die Förderwendel 18 umfasst beispielhaft drei Spiralgänge 30. Die Spiralgänge 30 sind beispielhaft symmetrisch ausgebildet. In Fig. 1b ist ein erster Querschnitt durch die Förderwendel 18 in einem vorderen Bereich der Förderwendel 18 gezeigt. Das Bohrwerkzeug 10 erstreckt sich entlang der Längsachse 14 von hinten, dem Einsteckende 16, nach vorne, dem Bohrkopf 20. Der Querschnitt ist senkrecht zu der Längsachse 14 ausgebildet.

Die Spiralgänge 30 werden jeweils von zwei Spiralarmen 32 begrenzt. Die Spiralarme 32 sind miteinander über einen Kern 34 des Bohrwerkzeugs 10 verbunden. Der Kern 34 verläuft koaxial zur Längsachse 14 des Bohrwerkzeugs 10. Ein Kerndickenkreis 36 des Kerns 34 ist der größtmögliche Kreis der im Querschnitt betrachtet von allen Nutengrunden 38 der Spiralgänge 30 tangiert wird. Der Kern 34 weist eine Kerndicke 35 auf, die dem Durchmesser des Kerndickenkreises 36 entspricht. Der Nutengrund 38 von symmetrischen Spiralgängen 30 liegt im Querschnitt betrachtet auf derselben radialen Höhe und in der vorliegenden Ausführungsform liegen alle drei Nutengründe 38 auf dem Kerndickenkreis 36. Bei nicht symmetrischen Spiralgängen 30 liegt zumindest ein Nutengrund 38 nicht auf dem Kerndickenkreis 36. Ein Mittelpunkt 40 des Kerndickenkreises 36 liegt zudem auf der Längsachse 14 des Bohrwerkzeugs 10.

Symmetrische Spiralgänge 30 weisen des Weiteren im Wesentlichen die gleiche Querschnittsfläche 42 auf. Die Querschnittsflächen 42 im vorderen Bereich der Förderwendel 18 weisen im Wesentlichen die gleiche Größe auf.

Am Übergang zwischen zwei Spiralgängen 30 weist das Bohrwerkzeug 10 eine Verschleißfläche 44 auf. Die Verschleißflächen 44 begrenzen die Förderwendel 18 nach außen. Die Verschleißflächen 44 sind insbesondere die radial außenliegenden Flächen der Spiralarme 32 der Spiralgänge 30. Die Spiralgänge 30 weisen im Querschnitt betrachtet gleiche Verschleißflächen 44 auf.

Zudem weisen die Verschleißflächen 44 eine Bandbreite 46 auf. Die Bandbreite 46 der Verschleißflächen 44 entspricht dabei einer Breite der Verschleißflächen senkrecht zu der Erstreckungsrichtung der jeweiligen Spiralarme 32. Die Bandbreite 46 der Spiralgänge 30 ist im vorderen Bereich der Förderwendel 18 im Wesentlichen gleich ausgebildet. Die Bandbreite 46 der Spiralgänge ist entlang der Längsachse 14 der Förderwendel 18 im Wesentlichen konstant ausgebildet, so dass sich die Bandbreite im Wesentlichen nicht verändert.

In Fig. 1c ist ein zweiter Querschnitt durch die Förderwendel 18 in einem hinteren Bereich der Förderwendel 18 gezeigt. Die Spiralgänge 30 sind im hinteren Bereich ebenso symmetrisch ausgebildet. Die Querschnittsflächen 48 der Spiralgänge 30 im hinteren Bereich sind somit im Wesentlichen gleich ausgebildet. Die Größe der Querschnittsflächen 48 im hinteren Bereich entsprechen somit auch der Größe der Querschnittsflächen 42 im vorderen Bereich. Zudem sind auch die Verschleißflächen 44, die Bandbreiten 46 der Verschleißflächen 44 und der Kerndickenkreis 36 im vorderen und hinteren Bereich im Wesentlichen gleich ausgebildet.

Die Spiralgänge 30 erstrecken sich somit sowohl symmetrisch als auch konstant entlang der Längsachse 14.

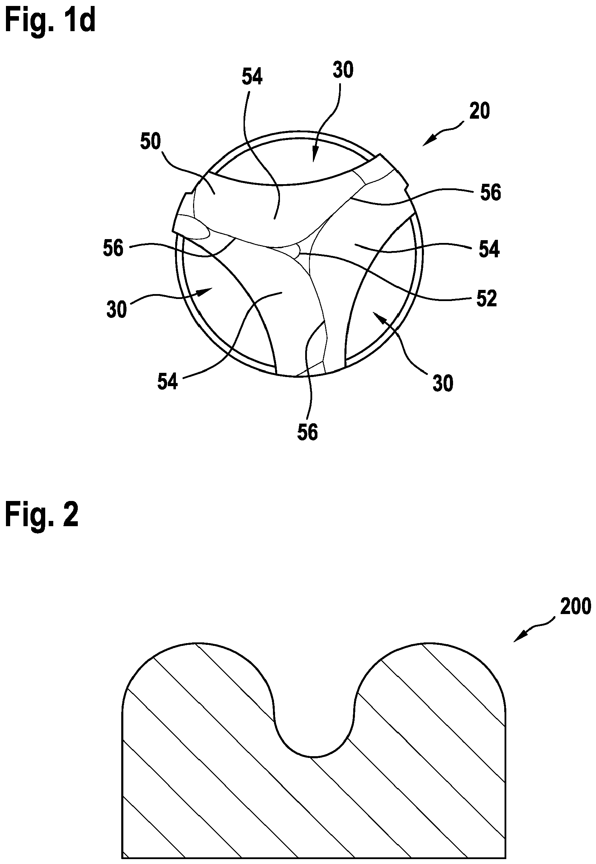

Der Bohrkopf 20 weist einen Schneidkörper 50 auf, der beispielhaft als ein Vollhartmetallkopf 50 ausgebildet ist. Der Schneidkörper 50 ist stoffschlüssig mit der Förderwendel 18 verbunden. Die Verbindung kann beispielsweise über ein Schweißverfahren oder ein Lötverfahren erfolgen. Der Bohrkopf 20 weist eine Zentrierspitze 52 auf, die das vordere stirnseitige Ende des Bohrwerkzeugs 10 bildet. Der Bohrkopf 20 weist beispielhaft drei Schneidelemente 54 auf, die sich ausgehend von der Zentrierspitze 52 nach außen erstrecken. Die Schneidelemente 54 weisen jeweils eine Schneidkante 56 auf, siehe Draufsicht auf das Bohrwerkzeug 10 in Fig. 1d.

Die Herstellung der Förderwendel erfolgt mittels einer Fräsvorrichtung 200. Eine beispielhafte Fräsergeometrie der Fräsvorrichtung 200 ist in Fig. 2 gezeigt. Die Fräsergeometrie der Fräsvorrichtung 200 ist derart ausgebildet, dass in einem Fräsvorgang zwei Spiralgänge 30 herstellbar sind.

Um die Förderwendel 18 gemäß Figur 1a herzustellen, werden in einem ersten Verfahrensschritt mittels der Fräsvorrichtung 200 zwei Spiralgänge 30 hergestellt. Im Anschluss wird die Fräsvorrichtung 200 und das Bohrwerkzeug 10 relativ zueinander um 120° derart gedreht, sodass ein Teil der Fräsergeometrie in einem bereits hergestellten Spiralgang 30 läuft und in einem zweiten Verfahrensschritt mit der gleichen Fräsvorrichtung 200 nur ein weiterer Spiralgang 30 hergestellt wird.

Die Herstellung der Förderwendel 18 gemäß Fig. 1a kann beispielsweise mit folgenden Parametern für den zweiten Verfahrensschritt erfolgen:
- Drehung des Bohrwerkzeugs 10 bezogen auf die Fräsvorrichtung 200 um 120°;
- Der Abstand zwischen dem Bohrwerkzeug 10 und der Fräsvorrichtung 200 ist konstant (Abstand im ersten Verfahrensschritt = Abstand im zweiten Verfahrensschritt), wodurch die Kerndicke konstant gehalten wird;
- Gleichbleibende Rotationsgeschwindigkeit des Bohrwerkzeugs 10 bzw. des Rohlings aus dem die Förderwendel 18 hergestellt wird. Zur Herstellung einer konstanten Steigung ist zusätzlich der Axialvorschub des Bohrwerkzeug gleich und konstant.

Durch diesen Herstellungsprozess sind zwei Enden 58 der Spiralgänge 30 entlang der Längsachse 14 hintereinander und zwei Enden 60 der Spiralgänge 30 senkrecht zu der Längsachse 14 nebeneinander angeordnet.

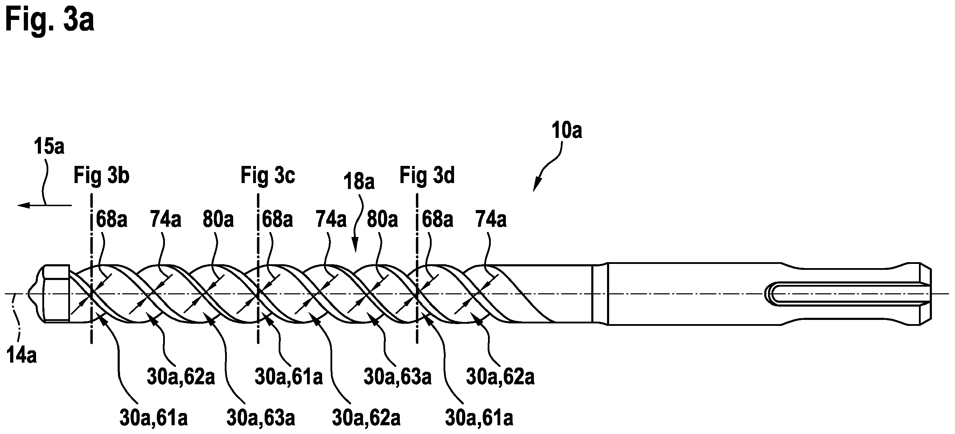

In Fig. 3a ist eine weitere Ausführungsform eines Bohrwerkzeugs 10a mit einer Förderwendel 18a in einer Seitenansicht gezeigt. Das Bohrwerkzeug 10a unterscheidet sich dabei insbesondere in der Ausgestaltung der Förderwendel 18a.

Die Förderwendel 18a weist drei Spiralgänge 30a auf. Einen ersten Spiralgang 61a, einen zweiten Spiralgang 62a und einen dritten Spiralgang 63a. Die Spiralgänge 30a erstrecken sich spiralförmig um die Längsachse 14a des Bohrwerkzeugs 10a. Die Steigung der verschiedenen Spiralgänge 30a verkleinert sich entgegen der Vorschubsrichtung.

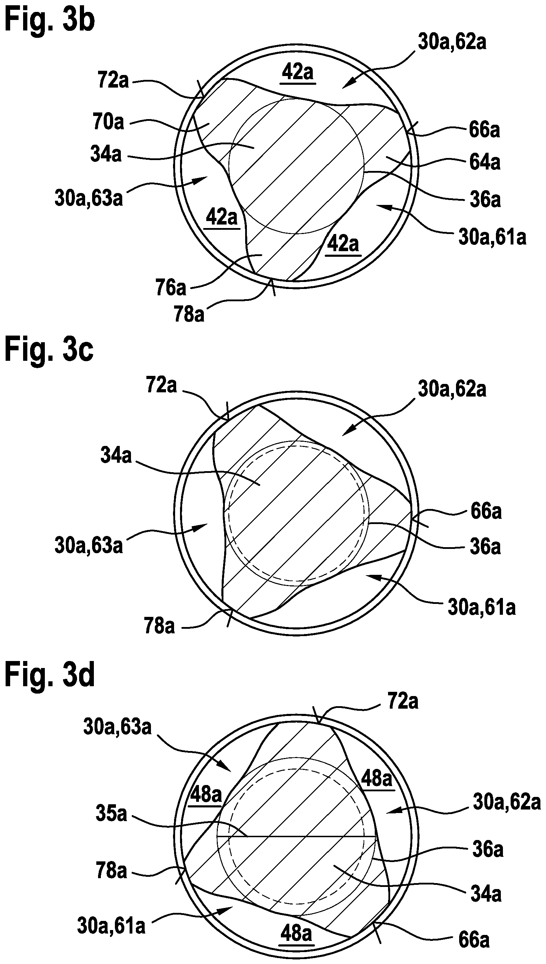

In Figur 3b ist ein Querschnitt des Bohrwerkzeugs 10a im vorderen Bereich, in Figur 3c im mittleren Bereich und in Figur 3d im hinteren Bereich, der Förderwendel 18a gezeigt. Die Querschnitte sind dabei in Fig. 3a zur besseren Orientierung ungefähr markiert.

Die Spiralgänge 30a sind nicht symmetrisch ausgebildet.

Zwischen dem ersten Spiralgang 61a und dem zweiten Spiralgang 62a ist ein erster Spiralarm 64a mit einer ersten Verschleißfläche 66a angeordnet. Die Verschleißfläche 66a weist eine Bandbreite 68a auf, die sich entlang der Längsachse 14a und gegen die Vorschubrichtung 15a des Bohrwerkzeugs 10a vergrößert.

Zwischen dem zweiten Spiralgang 62a und dem dritten Spiralgang 63a ist ein zweiter Spiralarm 70a mit einer zweiten Verschleißfläche 72a angeordnet. Die zweite Verschleißfläche 72a weist eine Bandbreite 74a auf, die sich entlang der Längsachse 14a und gegen die Vorschubrichtung 15a des Bohrwerkzeugs 10a vergrößert.

Zwischen dem dritten Spiralgang 63a und dem ersten Spiralgang 61a ist ein dritter Spiralarm 76a mit einer dritten Verschleißfläche 78a angeordnet. Die dritte Verschleißfläche 78a weist eine Bandbreite 80a auf, die sich entlang der Längsachse 14a und gegen die Vorschubrichtung 15a des Bohrwerkzeugs 10a verkleinert.

Die Querschnittsflächen 42a der Spiralgänge 30a (vgl. Fig. 3) im vorderen Bereich der Förderwendel 18a sind nicht symmetrisch ausgebildet und weisen eine leichte Asymmetrie auf. Die Querschnittsflächen 48a der Spiralgänge 30a im hinteren Bereich der Förderwendel 18a sind ebenfalls asymmetrisch ausgebildet, wobei die Asymmetrie im hinteren Bereich der Förderwendel 18a verstärkt ist (vgl. Fig. 3d)

Der Kern 34a des Bohrwerkzeugs 10a weist einen Kerndickenkreis 36a auf, der sich entlang der Längsachse 14a entgegen der Vorschubrichtung 15a vergrößert. Unter einer Vergrößerung soll in diesem Zusammenhang eine Vergrößerung des Durchmessers des Kerndickenkreises 36a verstanden werden. Im Vergleich der Querschnitte in Fig. 3b-d ist der Kerndickenkreis 36a im vorderen Bereich (vgl. Fig. 3b) der Förderwendel 18a am kleinsten ausgebildet und vergrößert sich proportional zum Abstand hin zudem größten Kerndickenkreis 36a im hinteren Bereich der Förderwendel 18a (vgl. Fig. 3d). Zur besseren Veranschaulichung ist die Kerndickenkreis 36a aus dem vorderen Bereich der Förderwendel 18a auch in Fig. 3c und 3d gestrichelt eingezeichnet. Beispielhaft vergrößert sich der Kerndickenkreis von der Bohrkopfseite zu der Einsteckendeseite der Förderwendel um ca. 20%.

Wie aus der Zusammenschau der Figuren 3b bis 3d zu entnehmen ist, steigt mit der jeweiligen Bandbreite auch die Verschleißfläche im Querschnitt betrachtet bzw. sinkt die jeweilige Verschleißfläche im Querschnitt betrachtet mit der Bandbreite.

Zur Herstellung der Förderwendel 18a wird das zuvor beschriebene Verfahren mit alternativen Parametern für den zweiten Verfahrensschritt verwendet:
- Drehung des Bohrwerkzeugs 10 bezogen auf die Fräsvorrichtung 200 um 120°;
- Der Abstand zwischen dem Bohrwerkzeug 10 und der Fräsvorrichtung 200 wird variiert, beispielhaft um einen Wert, der im Wesentlichen 5% des Durchmessers des Einsteckendes entspricht (1 mm);
- Verringerte Rotationsgeschwindigkeit des Bohrwerkzeugs 10 bzw. des Rohlings aus dem die Förderwendel 18 hergestellt wird mit Bezug auf den ersten Verfahrensschritt, wodurch die Steigung der Spiralgänge sich verändert, insbesondere in Richtung des Einsteckendes verkleinert wird. Alternativ wäre auch denkbar, dass die Rotationsgeschwindigkeit gleich ist, der Axialvorschub des Bohrwerkzeugs allerdings verringert wird und dadurch die Steigung verändert wird. Die alternative Änderung der Steigung über den Axialvorschub des Bohrwerkzeugs lässt sich auch auf die folgenden Ausführungen übertragen.

Am Beginn der Förderwendel 18a (Bohrkopfseite) weisen die drei Spiralarme 64a, 70a, 76a drei unterschiedliche Bandbreiten 68a, 74a, 80a auf. In Richtung des Endes der Förderwendel 18a (Einsteckendeseite) verkleinert sich dabei die kleinste Bandbreite 80a und die größte Bandbreite 74a vergrößert sich. Durch geeignete Anpassung der variierten Parameter ist ebenso denkbar, dass die unterschiedlichen Bandbreiten 68a, 74a, 80a am Ende der Förderwendel 18a im Wesentlichen gleich groß sind. Dabei kompensieren die Kerndickenzunahme und die Rotationsänderung den Unterschied in den Bandbreiten 68a, 74a, 80a.

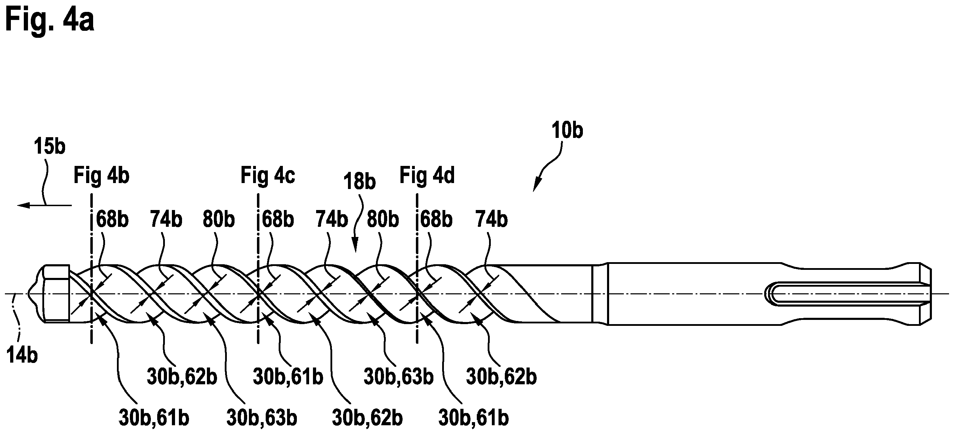

In Fig. 4a ist eine weitere Ausführungsform eines Bohrwerkzeugs 10b mit einer Förderwendel 18b in einer Seitenansicht gezeigt. Das Bohrwerkzeug 10b unterscheidet sich dabei insbesondere in der Ausgestaltung der Förderwendel 18b.

Die Förderwendel 18b weist drei Spiralgänge 30b auf. Einen ersten Spiralgang 61b, einen zweiten Spiralgang 62b und einen dritten Spiralgang 63b. Die Spiralgänge 30b erstrecken sich spiralförmig um die Längsachse 14b des Bohrwerkzeugs 10b. Die Steigung der verschiedenen Spiralgänge 30b verkleinert sich entgegen der Vorschubrichtung.

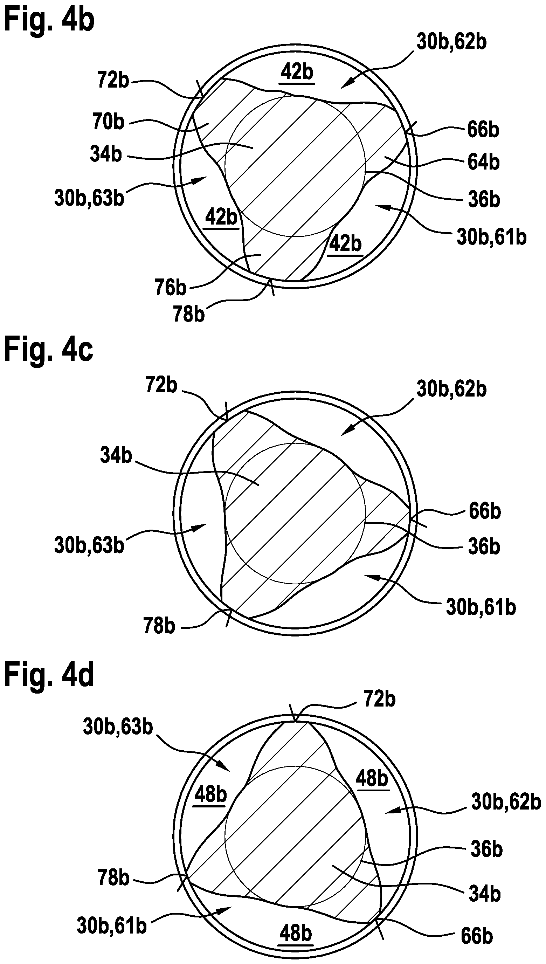

In Figur 4b ist ein Querschnitt des Bohrwerkzeugs 10b im vorderen Bereich, in Figur 4c im mittleren Bereich und in Figur 4d im hinteren Bereich, der Förderwendel 18b gezeigt. Die Querschnitte sind dabei in Fig. 4a zur besseren Orientierung ungefähr markiert.

Die Spiralgänge 30b sind nicht symmetrisch ausgebildet.

Zwischen dem ersten Spiralgang 61b und dem zweiten Spiralgang 62b ist ein erster Spiralarm 64b mit einer ersten Verschleißfläche 66b angeordnet. Die Verschleißfläche 66b weist eine Bandbreite 68b auf, die sich entlang der Längsachse 14b und gegen die Vorschubrichtung 15b des Bohrwerkzeugs 10b verkleinert.

Zwischen dem zweiten Spiralgang 62b und dem dritten Spiralgang 63b ist ein zweiter Spiralarm 70b mit einer zweiten Verschleißfläche 72b angeordnet. Die zweite Verschleißfläche 72b weist eine Bandbreite 74b auf, die sich entlang der Längsachse 14b und gegen eine Vorschubrichtung 15b des Bohrwerkzeugs 10b verkleinert.

Zwischen dem dritten Spiralgang 63b und dem ersten Spiralgang 61b ist ein dritter Spiralarm 76b mit einer dritten Verschleißfläche 78b angeordnet. Die dritte Verschleißfläche 78b weist eine Bandbreite 80b auf, die sich entlang der Längsachse 14b und gegen eine Vorschubrichtung 15b des Bohrwerkzeugs 10b verkleinert.

Die Querschnittsflächen 42b der Spiralgänge 30b (vgl. Fig. 4b) im vorderen Bereich der Förderwendel 18b sind nicht symmetrisch ausgebildet und weisen eine leichte Asymmetrie auf. Die Querschnittsflächen 48b der Spiralgänge 30b im hinteren Bereich der Förderwendel 18b sind ebenfalls asymmetrisch ausgebildet (vgl. Fig. 4d), wobei sich die Querschnittsflächen 48b im hinteren Bereich von den Querschnittsflächen 42b im vorderen Bereich der Förderwendel 18b unterscheiden, insbesondere größer sind.

Der Kern 34b des Bohrwerkzeugs 10b weist einen Kerndickenkreis 36b auf, der entlang der Längsachse 14b im Wesentlichen konstant ist Sowohl die Position des Kerndickenkreises 36b als auch die Größe ist entlang der Längsachse 14b im Wesentlichen konstant.

Wie aus der Zusammenschau der Figuren 4b bis 4d zu entnehmen ist, sinkt mit der jeweiligen Bandbreite auch die Verschleißfläche im Querschnitt betrachtet.

Zur Herstellung der Förderwendel 18b wird das zuvor beschriebene Verfahren mit alternativen Parametern für den zweiten Verfahrensschritt verwendet:
- Drehung des Bohrwerkzeugs 10b bezogen auf die Fräsvorrichtung 200 um 115°;
- Der Abstand zwischen dem Bohrwerkzeug 10b und der Fräsvorrichtung 200 ist konstant;
- Verringerte Rotationsgeschwindigkeit des Bohrwerkzeugs 10b bzw. des Rohlings aus dem die Förderwendel 18b hergestellt wird mit Bezug auf den ersten Verfahrensschritt, wodurch die Steigung der Spiralgänge sich verändert, insbesondere in Richtung des Einsteckendes verkleinert wird.

Am Beginn der Förderwendel 18b (Bohrkopfseite) weisen die drei Spiralarme 64b, 70b, 76b drei Bandbreiten 68b, 74b, 80b auf, die sich in Richtung des Endes der Förderwendel 18b (Einsteckendenseite) jeweils verkleinern.

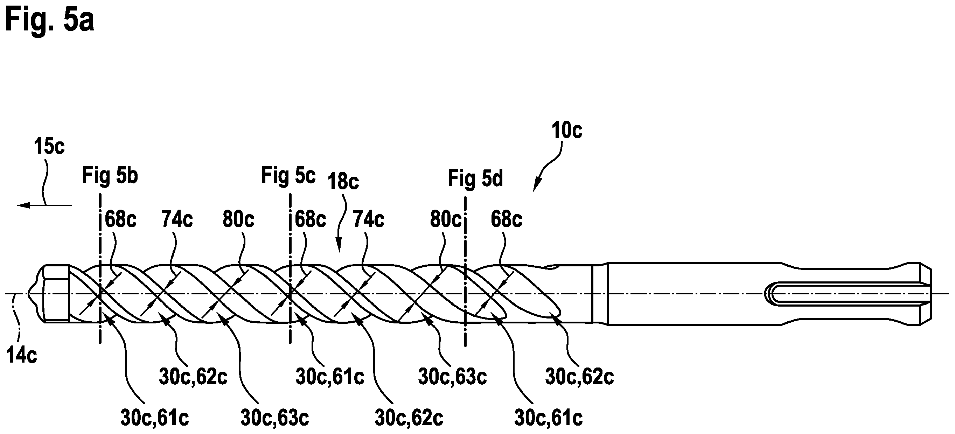

In Fig. 5a ist eine weitere Ausführungsform eines Bohrwerkzeugs 10c mit einer Förderwendel 18c in einer Seitenansicht gezeigt. Das Bohrwerkzeug 10c unterscheidet sich dabei insbesondere in der Ausgestaltung der Förderwendel 18c.

Die Förderwendel 18c weist drei Spiralgänge 30c auf. Einen ersten Spiralgang 61c, einen zweiten Spiralgang 62c und einen dritten Spiralgang 63c. Die Spiralgänge 30c erstrecken sich spiralförmig um die Längsachse 14c des Bohrwerkzeugs 10c. Die Steigung der verschiedenen Spiralgänge 30c ist gleich und konstant ausgebildet.

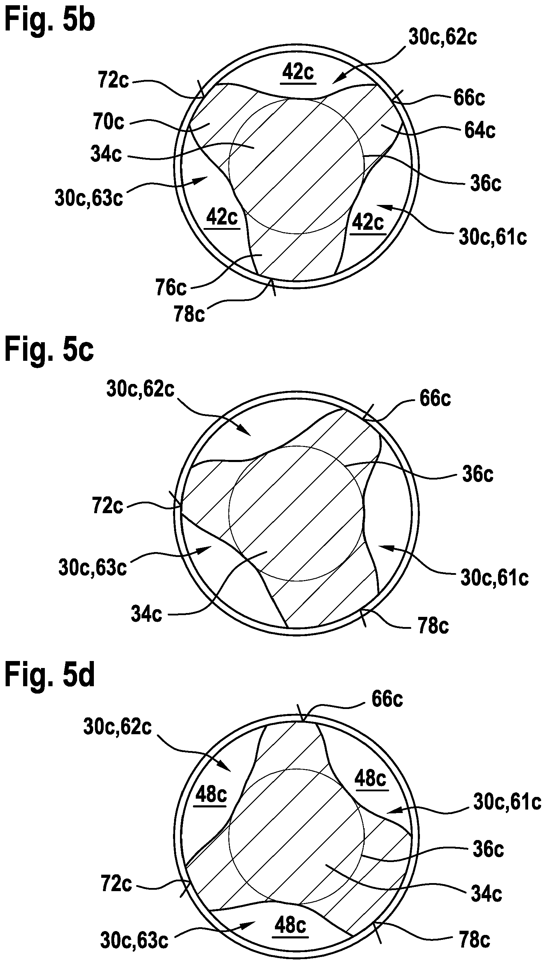

In Figur 5b ist ein Querschnitt des Bohrwerkzeugs 10c im vorderen Bereich, in Figur 5c im mittleren Bereich und in Figur 5d im hinteren Bereich, der Förderwendel 18c gezeigt. Die Querschnitte sind dabei in Fig. 5a zur besseren Orientierung ungefähr markiert.

Die Spiralgänge 30c sind nicht symmetrisch ausgebildet.

Zwischen dem ersten Spiralgang 61c und dem zweiten Spiralgang 62c ist ein erster Spiralarm 64c mit einer ersten Verschleißfläche 66c angeordnet. Die Verschleißfläche 66c weist eine Bandbreite 68c auf, die entlang der Längsachse 14c und gegen die Vorschubrichtung 15c des Bohrwerkzeugs 10c im Wesentlichen konstant ausgebildet ist.

Zwischen dem zweiten Spiralgang 62c und dem dritten Spiralgang 63c ist ein zweiter Spiralarm 70c mit einer zweiten Verschleißfläche 72c angeordnet. Die zweite Verschleißfläche 72c weist eine Bandbreite 74c auf, die entlang der Längsachse 14c und gegen eine Vorschubrichtung 15c des Bohrwerkzeugs 10c im Wesentlichen konstant ausgebildet ist.

Zwischen dem dritten Spiralgang 63c und dem ersten Spiralgang 61c ist ein dritter Spiralarm 76c mit einer dritten Verschleißfläche 78c angeordnet. Die dritte Verschleißfläche 78c weist eine Bandbreite 80c auf, die sich entlang der Längsachse 14c und gegen eine Vorschubrichtung 15c des Bohrwerkzeugs 10c vergrößert.

Die Querschnittsflächen 42c der Spiralgänge 30c (vgl. Fig. 5b) im vorderen Bereich der Förderwendel 18c sind nicht symmetrisch ausgebildet und weisen eine Asymmetrie auf. Die Querschnittsflächen 48c der Spiralgänge 30c im hinteren Bereich der Förderwendel 18c sind ebenfalls asymmetrisch ausgebildet (vgl. Fig. 5d), wobei sich die Querschnittsflächen 48c im hinteren Bereich von den Querschnittsflächen 42c im vorderen Bereich der Förderwendel 18c nur teilweise unterscheiden. Die Querschnittsfläche des zweiten Spiralgangs 62c ist im Wesentlichen konstant, während sich die Querschnittsflächen des ersten und des dritten Spiralgangs 61c, 63c verkleinern.

Der Kern 34c des Bohrwerkzeugs 10c weist einen Kerndickenkreis 36c auf, der entlang der Längsachse 14c im Wesentlichen konstant ist Sowohl die Position des Kerndickenkreises 36c als auch die Größe ist entlang der Längsachse 14c im Wesentlichen konstant.

Zur Herstellung der Förderwendel 18c wird das zuvor beschriebene Verfahren mit alternativen Parametern für den zweiten Verfahrensschritt verwendet:
- Drehung des Bohrwerkzeugs 10c bezogen auf die Fräsvorrichtung 200 um 115°;
- Der Abstand zwischen dem Bohrwerkzeug 10c und der Fräsvorrichtung 200 ist konstant;
- Erhöhte Rotationsgeschwindigkeit des Bohrwerkzeugs 10c bzw. des Rohlings aus dem die Förderwendel 18b hergestellt wird mit Bezug auf den ersten Verfahrensschritt, wodurch die Steigung der Spiralgänge sich verändert, insbesondere in Richtung des Einsteckendes vergrößert wird.

Am Beginn der Förderwendel 18c (Bohrkopfseite) weisen die drei Spiralarme 64c, 70c, 76c zwei unterschiedliche Bandbreiten auf. Zwei der Spiralarme 64c, 70c weisen die gleiche Bandbreite 68c, 74c auf und einer der Spiralarme 76c weist eine erhöhte Bandbreite 80c auf. Die kleinere Bandbreite 68c, 74c ist dabei konstant während die größere Bandbreite 80c sich vergrößert.

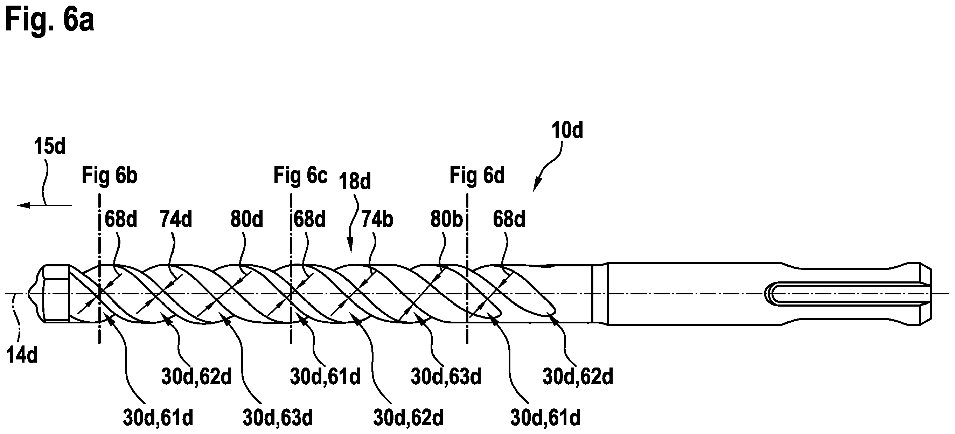

In Fig. 6a ist eine weitere Ausführungsform eines Bohrwerkzeugs 10d mit einer Förderwendel 18d in einer Seitenansicht gezeigt. Das Bohrwerkzeug 10d unterscheidet sich dabei insbesondere in der Ausgestaltung der Förderwendel 18d.

Die Förderwendel 18d weist drei Spiralgänge 30d auf. Einen ersten Spiralgang 61d, einen zweiten Spiralgang 62d und einen dritten Spiralgang 63d. Die Spiralgänge 30d erstrecken sich spiralförmig um die Längsachse 14d des Bohrwerkzeugs 10d. Die Steigung der verschiedenen Spiralgänge 30d vergrößert sich entgegen der Vorschubrichtung.

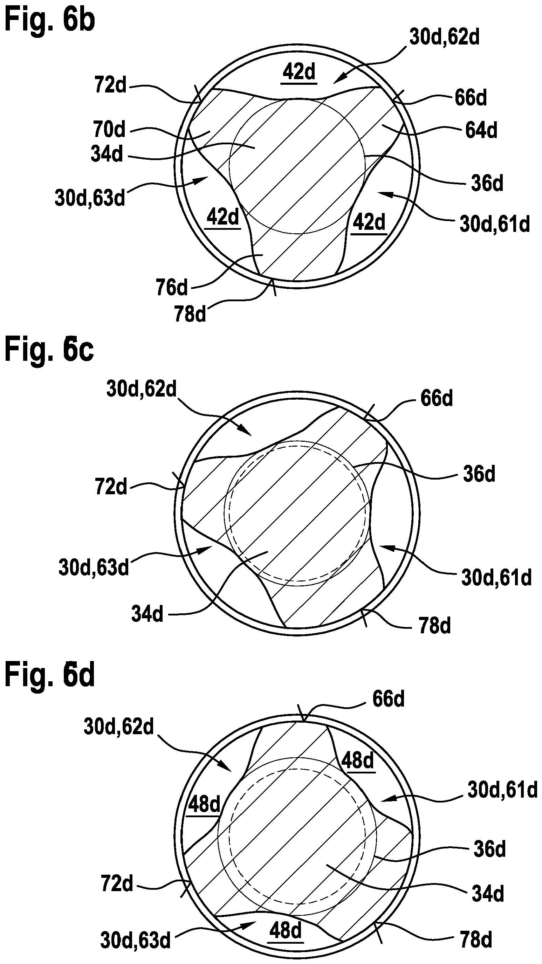

In Figur 6b ist ein Querschnitt des Bohrwerkzeugs 10d im vorderen Bereich, in Figur 6c im mittleren Bereich und in Figur 6d im hinteren Bereich, der Förderwendel 18d gezeigt. Die Querschnitte sind dabei in Fig. 6a zur besseren Orientierung ungefähr markiert.

Die Spiralgänge 30d sind nicht symmetrisch ausgebildet.

Zwischen dem ersten Spiralgang 61d und dem zweiten Spiralgang 62d ist ein erster Spiralarm 64d mit einer ersten Verschleißfläche 66d angeordnet. Die Verschleißfläche 66d weist eine Bandbreite 68d auf, die sich entlang der Längsachse 14d und gegen die Vorschubrichtung 15d des Bohrwerkzeugs 10d im Wesentlichen vergrößert.

Zwischen dem zweiten Spiralgang 62d und dem dritten Spiralgang 63d ist ein zweiter Spiralarm 70d mit einer zweiten Verschleißfläche 72d angeordnet. Die zweite Verschleißfläche 72d weist eine Bandbreite 74d auf, die sich entlang der Längsachse 14d und gegen eine Vorschubrichtung 15d des Bohrwerkzeugs 10d im Wesentlichen vergrößert.

Zwischen dem dritten Spiralgang 63d und dem ersten Spiralgang 61d ist ein dritter Spiralarm 76d mit einer dritten Verschleißfläche 78d angeordnet. Die dritte Verschleißfläche 78d weist eine Bandbreite 80d auf, die sich entlang der Längsachse 14d und gegen eine Vorschubrichtung 15d des Bohrwerkzeugs 10d vergrößert.

Die Querschnittsflächen 42d der Spiralgänge 30d (vgl. Fig. 6b) im vorderen Bereich der Förderwendel 18d sind nicht symmetrisch ausgebildet und weisen eine Asymmetrie auf. Die Querschnittsflächen 48d der Spiralgänge 30d im hinteren Bereich der Förderwendel 18d sind ebenfalls asymmetrisch ausgebildet (vgl. Fig. 6d), wobei sich die Querschnittsflächen 48d im hinteren Bereich von den Querschnittsflächen 42d im vorderen Bereich der Förderwendel 18d unterscheiden. Sämtliche Querschnittsflächen der Spiralgänge 30d verringern sich entlang der Längsachse 14d entgegen der Vorschubrichtung 15d.

Der Kern 34d des Bohrwerkzeugs 10d weist einen Kerndickenkreis 36d auf, der entlang der Längsachse 14d sich entgegen der Vorschubrichtung 15d vergrößert.

Wie aus der Zusammenschau der Figuren 6b bis 6d zu entnehmen ist, steigt mit der jeweiligen Bandbreite auch die Verschleißfläche im Querschnitt betrachtet, wobei die Querschnittsfläche antiproportional sinkt.

Zur Herstellung der Förderwendel 18d wird das zuvor beschriebene Verfahren mit alternativen Parametern für den zweiten Verfahrensschritt verwendet:
- Drehung des Bohrwerkzeugs 10d bezogen auf die Fräsvorrichtung 200 um 115°;
- Der Abstand zwischen dem Bohrwerkzeug 10d und der Fräsvorrichtung 200 wird variiert, beispielhaft um einen Wert, der im Wesentlichen 5% des Durchmessers des Einsteckendes entspricht (1 mm);
- Erhöhte Rotationsgeschwindigkeit des Bohrwerkzeugs 10d bzw. des Rohlings aus dem die Förderwendel 18d hergestellt wird mit Bezug auf den ersten Verfahrensschritt, wodurch die Steigung der Spiralgänge sich verändert, insbesondere in Richtung des Einsteckendes vergrößert wird.

Am Beginn der Förderwendel 18d (Bohrkopfseite) weisen die drei Spiralarme 64d, 70d, 76d zwei unterschiedliche Bandbreiten auf. Zwei der Spiralarme 64d, 70d weisen die gleiche Bandbreite 68d, 74d auf und einer der Spiralarme 76d weist eine erhöhte Bandbreite 80d auf. Sowohl die kleinere Bandbreite 68d, 74d als auch die größere Bandbreite 80d wird entlang der Längsachse 14d vergrößert.

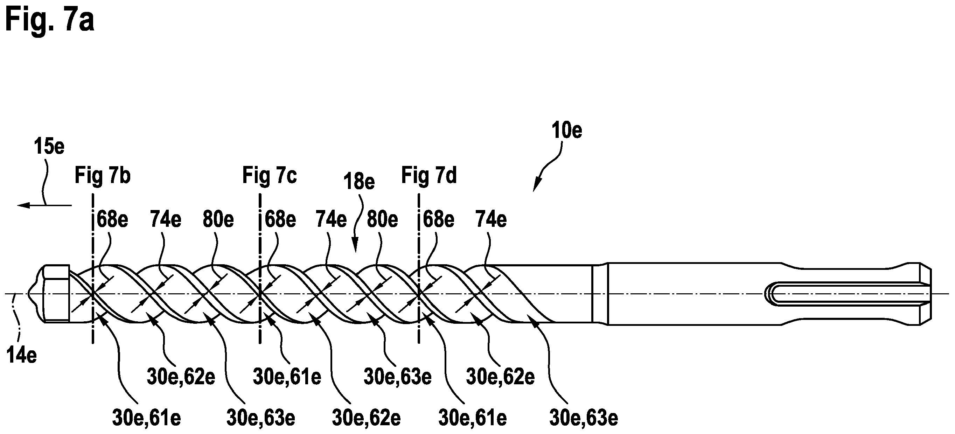

In Fig. 7a ist eine weitere Ausführungsform eines Bohrwerkzeugs 10e mit einer Förderwendel 18e in einer Seitenansicht gezeigt. Das Bohrwerkzeug 10e unterscheidet sich dabei insbesondere in der Ausgestaltung der Förderwendel 18e.

Die Förderwendel 18e weist drei Spiralgänge 30e auf. Einen ersten Spiralgang 61e, einen zweiten Spiralgang 62e und einen dritten Spiralgang 63e. Die Spiralgänge 30e erstrecken sich spiralförmig um die Längsachse 14e des Bohrwerkzeugs 10e.

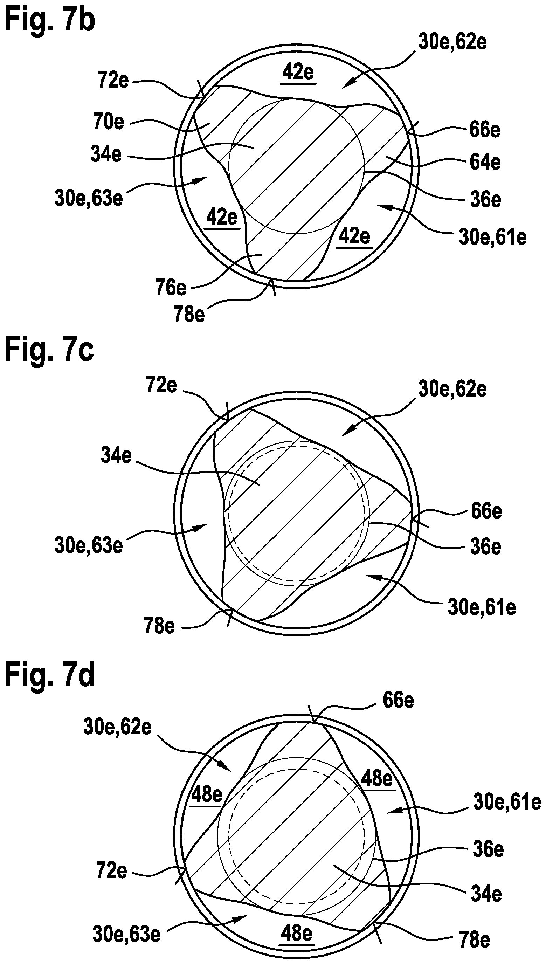

In Figur 7b ist ein Querschnitt des Bohrwerkzeugs 10e im vorderen Bereich, in Figur 7c im mittleren Bereich und in Figur 7d im hinteren Bereich, der Förderwendel 18e gezeigt. Die Querschnitte sind dabei in Fig. 7a zur besseren Orientierung ungefähr markiert.

Die Spiralgänge 30e sind nicht symmetrisch ausgebildet.

Zwischen dem ersten Spiralgang 61e und dem zweiten Spiralgang 62e ist ein erster Spiralarm 64e mit einer ersten Verschleißfläche 66eb angeordnet. Die Verschleißfläche 66e weist eine Bandbreite 68e auf, die sich entlang der Längsachse 14e und gegen die Vorschubrichtung 15e des Bohrwerkzeugs 10e vergrößert, insbesondere geringfügig vergrößert.

Zwischen dem zweiten Spiralgang 62e und dem dritten Spiralgang 63e ist ein zweiter Spiralarm 70e mit einer zweiten Verschleißfläche 72e angeordnet. Die zweite Verschleißfläche 72e weist eine Bandbreite 74e auf, die sich entlang der Längsachse 14e und gegen eine Vorschubrichtung 15e des Bohrwerkzeugs 10e vergrößert, insbesondere geringfügig vergrößert.

Zwischen dem dritten Spiralgang 63e und dem ersten Spiralgang 61e ist ein dritter Spiralarm 76e mit einer dritten Verschleißfläche 78e angeordnet. Die dritte Verschleißfläche 78e weist eine Bandbreite 80e auf, die sich entlang der Längsachse 14e und gegen eine Vorschubrichtung 15e des Bohrwerkzeugs 10e verkleinert, insbesondere geringfügig verkleinert.

Die Querschnittsflächen 42e der Spiralgänge 30e (vgl. Fig. 7b) im vorderen Bereich der Förderwendel 18e sind nicht symmetrisch ausgebildet und weisen eine Asymmetrie auf. Die Querschnittsflächen 48e der Spiralgänge 30e im hinteren Bereich der Förderwendel 18e sind ebenfalls asymmetrisch ausgebildet (vgl. Fig. 7d), wobei sich die Querschnittsflächen 48e im hinteren Bereich von den Querschnittsflächen 42e im vorderen Bereich der Förderwendel 18e unterscheiden, insbesondere verkleinert sind.

Der Kern 34e des Bohrwerkzeugs 10e weist einen Kerndickenkreis 36e auf, der sich entlang der Längsachse 14e und entgegen der Vorschubrichtung 15e vergrößert.

Zur Herstellung der Förderwendel 18e wird das zuvor beschriebene Verfahren mit alternativen Parametern für den zweiten Verfahrensschritt verwendet:
- Drehung des Bohrwerkzeugs 10e bezogen auf die Fräsvorrichtung 200 um 115°;
- Der Abstand zwischen dem Bohrwerkzeug 10e und der Fräsvorrichtung 200 wird variiert, beispielhaft um einen Wert, der im Wesentlichen 5% des Durchmessers des Einsteckendes entspricht (1 mm);
- Verringerte Rotationsgeschwindigkeit des Bohrwerkzeugs 10e bzw. des Rohlings aus dem die Förderwendel 18e hergestellt wird mit Bezug auf den ersten Verfahrensschritt, wodurch die Steigung der Spiralgänge sich verändert, insbesondere in Richtung des Einsteckendes verkleinert wird.

Durch geeignete Anpassung der verwendeten Parameter ist ebenso denkbar, dass die Spiralgänge 30e ähnliche oder im Wesentlichen gleiche Bandbreiten aufweisen. Unter ähnlich soll in diesem Zusammenhang eine geringfügige Abweichung unterhalt von 10% der Bandbreite verstanden werden.

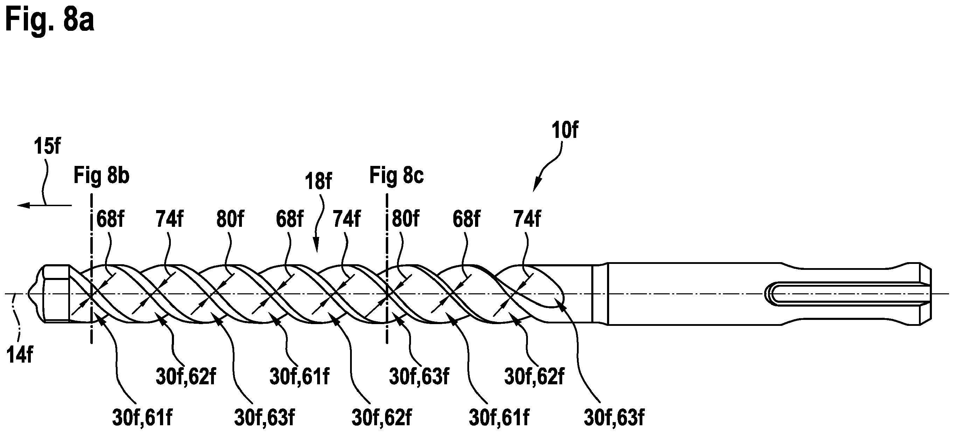

In Fig. 8a ist eine weitere Ausführungsform eines Bohrwerkzeugs 10f mit einer Förderwendel 18f in einer Seitenansicht gezeigt. Das Bohrwerkzeug 10f unterscheidet sich dabei insbesondere in der Ausgestaltung der Förderwendel 18f.

Die Förderwendel 18f weist drei Spiralgänge 30f auf. Einen ersten Spiralgang 61f, einen zweiten Spiralgang 62f und einen dritten Spiralgang 63f. Die Spiralgänge 30f erstrecken sich spiralförmig um die Längsachse 14f des Bohrwerkzeugs 10f. Die Steigung der verschiedenen Spiralgänge 30f ist gleich und konstant ausgebildet.

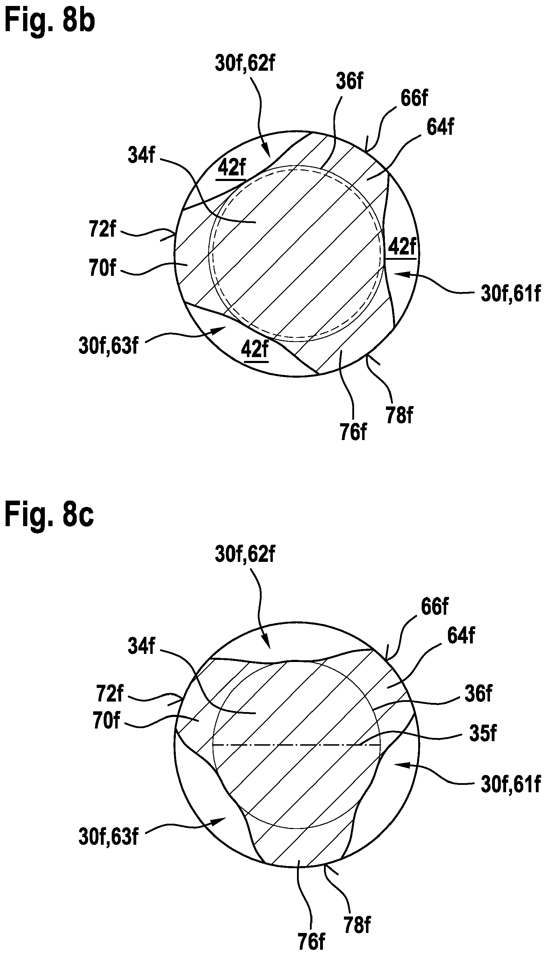

In Figur 8b ist ein Querschnitt des Bohrwerkzeugs 10f im vorderen Bereich und in Figur 8c im hinteren Bereich der Förderwendel 18f gezeigt. Die Querschnitte sind dabei in Fig. 8a zur besseren Orientierung ungefähr markiert.

Die Spiralgänge 30f sind im Wesentlichen symmetrisch ausgebildet.

Zwischen dem ersten Spiralgang 61f und dem zweiten Spiralgang 62f ist ein erster Spiralarm 64f mit einer ersten Verschleißfläche 66f angeordnet. Die Verschleißfläche 66f weist eine Bandbreite 68f auf, die sich entlang der Längsachse 14f und gegen die Vorschubrichtung 15f des Bohrwerkzeugs 10f verringert.

Zwischen dem zweiten Spiralgang 62f und dem dritten Spiralgang 63f ist ein zweiter Spiralarm 70f mit einer zweiten Verschleißfläche 72f angeordnet. Die zweite Verschleißfläche 72f weist eine Bandbreite 74f auf, die sich entlang der Längsachse 14f und gegen eine Vorschubrichtung 15f des Bohrwerkzeugs 10f verringert.

Zwischen dem dritten Spiralgang 63f und dem ersten Spiralgang 61f ist ein dritter Spiralarm 76f mit einer dritten Verschleißfläche 78f angeordnet. Die dritte Verschleißfläche 78f weist eine Bandbreite 80f auf, die sich entlang der Längsachse 14f und gegen eine Vorschubrichtung 15f des Bohrwerkzeugs 10f verringert.

Die Querschnittsflächen 42f der Spiralgänge 30f (vgl. Fig. 8b) im vorderen Bereich der Förderwendel 18f sind im Wesentlichen symmetrisch ausgebildet. Die Querschnittsflächen 48f der Spiralgänge 30f im hinteren Bereich der Förderwendel 18f sind ebenfalls symmetrisch ausgebildet (vgl. Fig. 8c), wobei sich die Querschnittsflächen 48f im hinteren Bereich von den Querschnittsflächen 42f im vorderen Bereich der Förderwendel 18f unterscheiden. Sämtliche Querschnittsflächen der Spiralgänge 30f vergrößern sich entlang der Längsachse 14f entgegen der Vorschubrichtung 15f.

Der Kern 34f des Bohrwerkzeugs 10f weist einen Kerndickenkreis 36f auf, der entlang der Längsachse 14f sich entgegen der Vorschubrichtung 15f vergrößert. Die Vergrößerung erfolgt dabei stetig und proportional dem Abstand.

Wie aus der Zusammenschau der Figuren 8b bis 8c zu entnehmen ist, sinkt mit der jeweiligen Bandbreite auch die Verschleißfläche im Querschnitt betrachtet, wobei die Querschnittsfläche proportional steigt.

Zur Herstellung der Förderwendel 18g wird das zuvor beschriebene Verfahren mit alternativen Parametern für den zweiten Verfahrensschritt verwendet:
- Drehung des Bohrwerkzeugs 10f bezogen auf die Fräsvorrichtung 200 um 120°;
- Der Abstand zwischen dem Bohrwerkzeug 10f und der Fräsvorrichtung 200 wird variiert, beispielhaft um einen Wert, der im Wesentlichen 5% des Durchmessers des Einsteckendes entspricht (1 mm);
- gleichbleibende Rotationsgeschwindigkeit des Bohrwerkzeugs 10f bzw. des Rohlings aus dem die Förderwendel 18f hergestellt wird mit Bezug auf den ersten Verfahrensschritt.

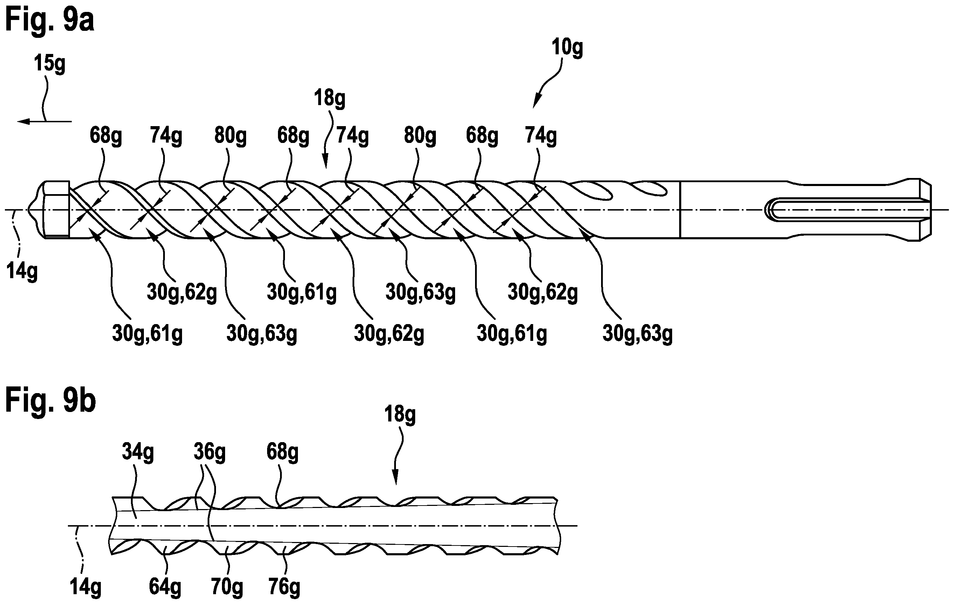

In Fig. 9a ist eine weitere Ausführungsform eines Bohrwerkzeugs 10g mit einer Förderwendel 18g in einer Seitenansicht gezeigt. Das Bohrwerkzeug 10g unterscheidet sich dabei insbesondere in der Ausgestaltung der Förderwendel 18g.

Die Förderwendel 18g weist drei Spiralgänge 30g auf. Einen ersten Spiralgang 61g, einen zweiten Spiralgang 62g und einen dritten Spiralgang 63g. Die Spiralgänge 30g erstrecken sich spiralförmig um die Längsachse 14g des Bohrwerkzeugs 10g. Die Steigung der verschiedenen Spiralgänge 30g ist gleich und konstant ausgebildet.

In Figur 9b ist ein Längsschnitt der Förderwendel 18g des Bohrwerkzeugs 10g gezeigt.

Zwischen dem ersten Spiralgang 61g und dem zweiten Spiralgang 62g ist ein erster Spiralarm 64g mit einer ersten Verschleißfläche 66g angeordnet. Die Verschleißfläche 66g weist eine Bandbreite 68g auf, die sich entlang der Längsachse 14g und gegen die Vorschubrichtung 15g des Bohrwerkzeugs 10g vergrößert.

Zwischen dem zweiten Spiralgang 62g und dem dritten Spiralgang 63g ist ein zweiter Spiralarm 70g mit einer zweiten Verschleißfläche 72g angeordnet. Die zweite Verschleißfläche 72g weist eine zweite Bandbreite 74g auf, die sich entlang der Längsachse 14g und gegen eine Vorschubrichtung 15g des Bohrwerkzeugs 10f vergrößert.

Zwischen dem dritten Spiralgang 63g und dem ersten Spiralgang 61g ist ein dritter Spiralarm 76g mit einer dritten Verschleißfläche 78g angeordnet. Die dritte Verschleißfläche 78g weist eine Bandbreite 80g auf, die sich entlang der Längsachse 14g und gegen eine Vorschubrichtung 15g des Bohrwerkzeugs 10g vergrößert.

Die Spiralarme sind derart ausgebildet, dass von der Seite betrachtet untereinanderliegende drei Bandbreiten 68g, 74g, 80g im Wesentlichen die gleiche Größe aufweisen oder nur geringfügig voneinander abweichen.

Der Kern 34g des Bohrwerkzeugs 10g weist einen Kerndickenkreis 36g auf, der sich entlang der Längsachse 14g entgegen der Vorschubrichtung 15g vergrößert. Die Vergrößerung erfolgt dabei stetig und proportional zu dem Abstand.

Zur Herstellung der Förderwendel 18g wird das zuvor beschriebene Verfahren mit alternativen Parametern für den zweiten Verfahrensschritt verwendet:
- Drehung des Bohrwerkzeugs 10g bezogen auf die Fräsvorrichtung 200 um 115°;
- Der Abstand zwischen dem Bohrwerkzeug 10g und der Fräsvorrichtung 200 wird variiert;
- gleichbleibende Rotationsgeschwindigkeit des Bohrwerkzeugs 10g bzw. des Rohlings aus dem die Förderwendel 18g hergestellt wird mit Bezug auf den ersten Verfahrensschritt.

## Patentansprüche

1. Verfahren zur Herstellung einer Förderwendel (18), mit m Spiralgängen mittels einer Fräsvorrichtung, wobei in einem ersten Verfahrensschritt mittels der Fräsvorrichtung n Spiralgänge (30), wobei n = 2 oder ein Vielfaches von zwei ist, hergestellt werden und in einem zweiten Verfahrensschritt n-1 weitere Spiralgänge (30), insbesondere ein einzelner weiterer Spiralgang (30), hergestellt wird.

2. Verfahren nach Anspruch 1, **dadurch gekennzeichnet, dass** in dem ersten Verfahrensschritt die Spiralgänge (30) derart ausgebildet werden, dass die Förderwendel (18) vor dem zweiten Verfahrensschritt eine konstante Kerndicke (35) aufweist.

3. Verfahren nach einem der vorhergehenden Ansprüche, **dadurch gekennzeichnet, dass** in dem zweiten Verfahrensschritt die Spiralgänge (30) derart ausgebildet werden, dass die Förderwendel (18) nach dem zweiten Verfahrensschritt eine konstante Kerndicke (35), ein steigende Kerndicke (35a) oder eine sinkende Kerndicke (35f) aufweist.

4. Verfahren nach einem der vorhergehenden Ansprüche, **dadurch gekennzeichnet, dass** zwischen dem ersten Verfahrensschritt und dem zweiten Verfahrensschritt die Förderwendel (18) und die Fräsvorrichtung (200) relativ zueinander um einen Winkel von 120° +/- X, wobei X in einem Bereich zwischen 0° und 15° liegt, gedreht werden.

5. Verfahren nach einem der vorhergehenden Ansprüche, **dadurch gekennzeichnet, dass** im ersten Verfahrensschritt oder im zweiten Verfahrensschritt die Förderwendel (18a) während des Fräsens in einer unterschiedlichen Geschwindigkeit gedreht wird.

6. Bohrwerkzeug, insbesondere Gesteinsbohrer, mit einer Förderwendel (18) zum Abtransport von Spänen und/oder Gestein aus einem Bohrloch, wobei die Förderwendel (18) zumindest drei Spiralgänge (30) aufweist, wobei die Förderwendel (18) insbesondere über ein Verfahren gemäß Anspruch 1 hergestellt ist.

7. Bohrwerkzeug nach Anspruch 6, **dadurch gekennzeichnet, dass** das Bohrwerkzeug (10) am Übergang zwischen den Spiralgängen (30) Verschleißflächen (66a, 72a, 78a) aufweist, wobei eine erste Bandbreite (68a) einer ersten Verschleißfläche (66a) sich von einer dritten Bandbreite (80a) einer dritten Verschleißfläche (78a) unterscheidet und eine zweite Bandbreite (74a) einer zweiten Verschleißfläche (72a) der ersten Bandbreite (68a) entspricht.

8. Bohrwerkzeug nach Anspruch 7, **dadurch gekennzeichnet, dass** die Bandbreiten (66a, 72a, 78a) variierend oder konstant ausgebildet sind.

9. Bohrwerkzeug nach einem der Ansprüche 6 bis 8, **dadurch gekennzeichnet, dass** ein Mittelpunkt eines Kerndickenkreis (36) beabstandet zu einer Rotationsachse des Bohrwerkzeugs (10) ausgebildet ist.

10. Bohrwerkzeug nach einem der Ansprüche 6 bis 9, **dadurch gekennzeichnet, dass** die Spiralgänge (30) jeweils eine Steigung aufweisen, wobei die Steigungen konstant oder variierend ausgebildet sind.

11. Bohrwerkzeug nach einem der Ansprüche 6 bis 10, **dadurch gekennzeichnet, dass** die Spiralgänge unterschiedliche Steigungen aufweisen.

12. Bohrwerkzeug nach einem der Ansprüche 6 bis 11, **dadurch gekennzeichnet, dass** die Spiralgänge (30a) unterschiedliche Querschnitte (42a, 48a) aufweisen.

13. Bohrwerkzeug nach einem der Ansprüche 6 bis 12, **dadurch gekennzeichnet, dass** das Bohrwerkzeug (10) einen Bohrkopf (20) aufweist, der mit der Förderwendel (18) verbunden ist, wobei der Bohrkopf (20) vorzugsweise als ein Vollhartmetallkopf ausgebildet ist.
